# EUROPÄISCHE PATENTSCHRIFT

(11) **EP 1 779 312 B1**
(45) Veröffentlichungstag und Bekanntmachung des Hinweises auf die Patenterteilung: **17.09.2008**
(21) Anmeldenummer: 05775915.1
(22) Anmeldetag: 19.07.2005
(51) Int. Cl.: G06Q 10/00, G06K 17/00, G09G 5/00

(54) **BEHÄLTER MIT ELEKTRONISCHEM ETIKETT, VERWENDUNG EINES ELEKTRONISCHEN ETIKETTS ZUR KENNZEICHNUNG VON BEHÄLTERN**
CONTAINER COMPRISING AN ELECTRONIC LABEL, AND USE OF AN ELECTRONIC LABEL FOR IDENTIFYING A CONTAINER
RECIPIENT COMPRENANT UNE ETIQUETTE ELECTRONIQUE, UTILISATION D'UNE ETIQUETTE ELECTRONIQUE POUR IDENTIFIER UN RECIPIENT

(30) Priorität: 30.07.2004 DE 102004037365
(43) Veröffentlichungstag der Anmeldung: 02.05.2007
(73) Patentinhaber: Deutsche Post AG, 53113 Bonn (DE)
(72) Erfinder: FETHKE, Christoph, 48161 Münster (DE); STÖNNER, Gerhard, 55130 Mainz (DE)
(74) Vertreter: Jostarndt, Hans-Dieter
(86) Internationale Anmeldenummer: PCT/EP2005/007848
(87) Internationale Veröffentlichungsnummer: WO 2006/012997

(56) Entgegenhaltungen:
- EP-A- 0 949 015
- EP-A- 1 255 223
- WO-A-02/063602
- US-A- 5 153 842
- US-A1- 2003 132 924

## Beschreibung

Die Erfindung betrifft einen Behälter zur Aufnahme und/oder zum Transport von Gegenständen.

Die Erfindung betrifft ferner die Verwendung eines elektronischen Etiketts.

Zur visuell erfassbaren Kennzeichnung von Gegenständen wie Waren, Behältern, Gebinden oder Paletten ist es bekannt, diese mit Etiketten zu versehen, welche beispielsweise Informationen über den Inhalt, das Transportziel oder den Preis einer Ware enthalten. Anhand dieser Kennzeichnung können Personen für sie erforderliche Informationen ablesen und entsprechende Handlungen wie beispielsweise den Transport eines Gegenstands zu einer angegebenen Zielposition durchführen. Handelt es sich um veränderliche Informationen, muss bei jeder Änderung eine neue Kennzeichnung auf dem betreffenden Gegenstand angebracht werden. Üblicherweise werden die Informationen dazu manuell von dem Etikett entfernt und durch neue Informationen ersetzt. Das alte Etikett kann auch vollständig durch ein neues ersetzt oder beispielsweise mit einem neuen Etikett überklebt werden.

Um die Nachteile herkömmlicher Etiketten zu vermeiden, werden verstärkt elektronische Label beispielsweise auf der Basis von organischen Polymer-Displays oder elektronischer Tinte beziehungsweise elektronischem Papier entwickelt. Ein derartiges Etikett ist in der internationalen Patentanmeldung WO 00/16189 A1 beschrieben. Das Etikett ist aus mehreren Schichten wie Anzeige-, Aktivierungsgitter-, Prozessor- und Antennenschichten und einem Speicherelement aufgebaut, wobei die Anzeigeschichten eine auf einem Träger angeordnete elektronische Tinte aufweisen. Über die Antennenschicht können dem Etikett die anzuzeigenden Informationen übermittelt werden.

Eine typische Verwendung elektronischer Etiketten ist in der internationalen Patentanmeldung WO 00/67110 A1 beschrieben, welche elektronische Etiketten zur veränderlichen Preiskennzeichnung von Waren offenbart. Dabei wird ein elektronisches Label an einem Verkaufsregal angebracht, auf welchem sich Waren befinden, so dass die Anzeige mit veränderlichen Preisen oder weiteren Produktinformationen angesteuert werden kann.

Ferner ist es bekannt, die visuell erfassbare Kennzeichnung von Gegenständen in Transport- oder Logistiksystemen durch RFID-Technologien mit elektronisch mehrfach beschreibbaren und auslesbaren Transpondern zu ersetzen. Derartige Systeme haben den Vorteil, dass in einem Transponder eine Vielzahl von Informationen elektronisch ein- und ausgelesen werden kann, wodurch automatische Transport-, Sortier-, Nachverfolgungs-oder Verteilvorgänge gesteuert werden können, ohne dass eine visuelle Anzeige von Informationen erforderlich ist.

Ein Beispiel für die Verwendung von RFID-Transpondern im postalischen Bereich ist in der internationalen Patentanmeldung WO 03/098533 A1 offenbart. Die RFID-Transponder werden an Postsendungen angebracht und diese anhand der ein- und auslesbaren Informationen sortiert und zu einem Zustellort transportiert.

Eine weitere Verwendung von RFID-Labeln ist in der deutschen Gebrauchsmusterschrift DE 202 07 972 U1 offenbart, welche Lastträger wie Paletten mit Transpondern beschreibt. Dabei sind in dem Transponder Informationen wie der Eigentümer, der Inhalt oder die Lastträgeridentifikationsnummer eines gekennzeichneten Lastträgers gespeichert.

Insbesondere in Logistiksystemen wie Postversandsystemen wird zur Aufnahme und/oder zum Transport von Postsendungen eine Vielzahl von Behältern eingesetzt, welche an verschiedenen Bearbeitungs- und Umschlagstationen gekennzeichnet werden müssen. Dies erfordert typischerweise eine große Menge an Papierlabeln, die für jeden Labelwechsel bedruckt und ausgetauscht werden müssen. Damit ist ein hoher Material-, Personal-, Entsorgungs- und Kostenaufwand verbunden. Ferner ist die Kennzeichnung von Behältern mit einmaligen Etiketten fehlerbehaftet, da es zu Verwechslungen bei der manuellen Anbringung neuer Etiketten kommen kann. Visuell oder optisch erfassbare Etiketten sind jedoch für bestimmte Ausführungsformen von Postversandsystemen erforderlich, falls für die Zuordnung und den Transport von Behältern wenigstens teilweise Personal eingesetzt wird.

Die internationale Patentanmeldung WO 02/063602 A1 beschreibt beispielsweise elektronische Label, die vorzugsweise dünn und flexibel sind, damit sie für die verschiedensten Anwendungen vorteilhaft einsetzbar sind. Die Label werden auf Basis von elektronischer Tinte hergestellt und weisen beispielsweise RF-Komponenten auf, um eine drahtlose Übertragung von Daten von einer Sendevorrichtung auf die Anzeige des Labels zu ermöglichen.

Aus der Patentschrift US 5,153,842 ist ferner ein System zu entnehmen, bei dem Pakete oder Gruppen von Paketen mit einem elektronischen Label versehen werden, das ein Display aufweist. Auf dem Display können alphanumerische Zeichen und/oder ein Barcode dargestellt werden. In einem Speicher des Labels können weitere Daten gesammelt und ausgelesen werden. Wird das Paket versendet und von einem Versender an ein Logistikunternehmen und innerhalb des Transportprozesses beispielsweise einem Sortiervorgang unterzogen, können an allen Stationen weitere Informationen gesammelt und im Label hinterlegt werden.

Aufgabe der Erfindung ist es, einen Behälter bereitzustellen, der so mit einer optisch erfassbaren Kennzeichnung ausgestattet ist, dass die Nachteile bekannter Behälterkennzeichnungen vermieden werden. Insbesondere soll der Material-, Personal-, Entsorgungs- und Kostenaufwand bei veränderlichen Kennzeichnungsinformationen verringert werden.

Erfindungsgemäß wird diese Aufgabe durch den Gegenstand des unabhängigen Anspruchs 1 gelöst. Vorteilhafte Weiterbildungen der Erfindung ergeben sich aus den Unteransprüchen 2-5.

Die Erfindung sieht einen Behälter zur Aufnahme und/oder zum Transport von Gegenständen vor, der ein mehrfach beschreibbares elektronisches Etikett aufweist, wobei das Etikett wenigstens eine optisch erfassbare elektronische Anzeige beinhaltet, die Informationen anzeigt. Vorzugsweise handelt es sich bei dem Behälter um einen postalischen Behälter zur Aufnahme und/oder zum Transport von Postsendungen. Beispielsweise kann der Behälter in einem postalischen Sortiersystem verwendet werden und die optisch erfassbare elektronische Anzeige zeigt den Inhalt und/oder entsprechende Sortier- und Umschlagstationen des Behälters an, zu welchen der Behälter zugeordnet und transportiert wird. Es handelt sich somit vorzugsweise um einen Behälter eines Behältersystems, wobei das System mehrere Behälter aufweist, die an verschiedenen Stationen des Gesamtsystems befüllt und entleert werden und zwischen verschiedenen Stationen bewegt werden.

Bei der optisch erfassbaren Anzeige des elektronischen Etiketts kann es sich beispielsweise um ein Bauteil auf der Basis eines monostabilen Flüssigkristalldisplays handelt. In einem weiteren besonders bevorzugten Ausführungsbeispiel der Erfindung handelt es sich um ein Bauteil auf der Basis eines bistabilen Flüssigkristalldisplays. Derartige Flüssigkristalldisplays können beispielsweise auf einer FLCD-, EASL-, ZBD-, BiNem- oder ChLCD-Technologie basieren. Zur Anwendung können ferner Bauteile auf der Basis von elektronischer Tinte mit bistabilen Elementen kommen.

In einem besonders bevorzugten Ausführungsbeispiel der Erfindung weist das elektronische Etikett des Behälters zusätzlich zu einer optisch erfassbaren elektronischen Anzeige einen beschreib- und auslesbaren RFID-Transponder auf. Dabei können in der optischen Anzeige und in dem RFID-Transponder die gleichen oder unterschiedlichen Informationen angezeigt werden, beziehungsweise aus diesem auslesbar sein.

Die Übertragung von Informationen auf das elektronische Etikett erfolgt vorzugsweise berührungslos. Es können jedoch auch Übertragungen mittels eines direkten Kontakts mit dem Etikett erfolgen.

Von der Erfindung umfasst ist ferner die Verwendung eines mehrfach beschreibbaren elektronischen Etiketts zur Kennzeichnung eines Behälters zur Aufnahme und/oder zum Transport von Gegenständen; wobei das Etikett wenigstens eine optisch erfassbare elektronische Anzeige beinhaltet, welche Informationen anzeigt.

Die Verwendung eines elektronischen Etiketts zur Kennzeichnung eines Behälters hat den Vorteil, dass wiederholt veränderliche Informationen angezeigt werden können, ohne dass das Etikett ausgetauscht oder manuell verändert werden muss. Dadurch lässt sich der Material-, Personal-, Entsörgungs- und Kostenaufwand für die Kennzeichnung des Behälters erheblich reduzieren. Da keine Papierlabel erzeugt und manuell an einem Behälter mehr befestigt werden müssen, lassen sich Fehler wie Verwechslungen vermeiden. Vielmehr können die veränderlichen Informationen nach einem steuer- und überwachbaren System auf den Behälter übertragen werden, was die Zuverlässigkeit der Behälterkennzeichnung erhöht.

Weitere Vorteile, Besonderheiten und zweckmäßige Weiterbildungen der Erfindung ergeben sich aus den Unteransprüchen und der nachfolgenden Beschreibung verschiedener bevorzugter Ausführungsbeispiele.

Ein erfindungsgemäßer Behälter kann in jeglichen Behältersystemen eingesetzt werden, bei denen Informationen zu einem Behälter wenigstens teilweise optisch oder visuell erfassbar sein müssen. Dabei kann es sich um Texte oder graphische Informationen handeln, deren Informationsgehalt von Personalkräften ablesbar ist. Ferner kann es sich um verschlüsselte Informationen handeln, welche mittels einer optischen Vorrichtung erfasst werden. Dies ist beispielsweise für Barcodes der Fall, welche von einem Scanner eingelesen werden können. Auch diese können bei geeigneter Auflösung durch eine elektronische Anzeige dargestellt werden.

Typische Barcodes auf Labeln zur Kennzeichnung von Gegenständen stellen eine 18-stellige Batch-ID dar, in der im Falle des postalischen Transports von Behältern beispielsweise eine Empfangsstelle, die Sendungsart, die Absenderkennung, eine Checkpoint-Nummer sowie eine laufende Nummer kodiert sind. Dabei können Teile dieser Informationen auch in für Personal lesbarer Form auf dem Label zur Anzeige gebracht werden.

In einem bevorzugten Ausführungsbeispiel der Erfindung handelt es sich bei einem Behälter zur Aufnahme und/oder zum Transport von Gegenständen um einen Behälter eines postalischen Behältersystems, in welchem Postsendungen transportiert und sortiert werden. Neben den Behältern können in einem derartigen Transportsystem auch Behälterwagen oder -paletten mit Labeln gekennzeichnet werden. Die Behälter sind typischerweise so aufgebaut, dass sie ineinander und/oder aufeinander stapelbar und gegebenenfalls mit einem Deckel verschließbar sind. Neben weiteren Funktionsteilen wie Verstärkungsstreben oder Grifföffnungen sind die Behälter vorzugsweise mit einer Aufnahmevorrichtung für Etiketten versehen. Die Aufnahmevorrichtung wird dabei beispielsweise durch Schienen gebildet, zwischen welche ein Etikett geschoben werden kann. Zusätzlich kann eine transparente Folie vorgesehen sein, hinter der das Etikett vor Umwelteinflüssen geschützt ist. Das Etikett kann jedoch auch ohne eine spezielle Ausformung des Behälters an diesem angebracht werden.

Das elektronische Etikett wird vorzugsweise in Form eines flachen Bauteils angebracht. Um ein ungewolltes Loslösen zu vermeiden, kann das Etikett fest mit dem Behälter verbunden werden, wie dies beispielsweise bei einer Klebeverbindung der Fall ist. Es hat sich jedoch als zweckmäßig erwiesen, eine lösbare Befestigung zu wählen, was einen Austausch des Etiketts ermöglicht.

Das elektronische Etikett weist wenigstens eine optisch oder visuell erfassbare elektronische Anzeige auf. Da bei monostabilen Anzeigesystemen bei einem Ausfall der Spannungsquelle die angezeigten Informationen nicht mehr sichtbar sind, werden auf dem elektronischen Informationsträger vorzugsweise bistabile Anzeigeeinheiten eingesetzt. Als Display können verschiedene Technologien beispielsweise auf Basis der Flüssigkeitskristalle verwendet werden. Bei der Auswahl einer geeigneten Displaytechologie sind je nach Anwendungsgebiet Kriterien wie Flexibilität, Stoßfestigkeit, Lebensdauer, Wartungsaufwand, Witterungsbeständigkeit, Arbeitstemperaturbereich, Anzahl der Schreibzyklen und die Generierungsintervalle zu berücksichtigen.

Eine mögliche Displaytechnologie stellt die FLCD-Technologie (Ferroelectric Liquid Crystal Display) dar. Ferroelektrische Flüssigkristallphasen werden von chiralen oder chiral dotierten smektischen C-Phasen gebildet. Durch die Kippung der Moleküllängsachsen innerhalb der smektischen Schichten entsteht eine spontane Polarisation senkrecht zur Schichtnormalen. Durch Anlegen eines elektrischen Feldes entgegen dieser Polarisation wird die Kipprichtung der Moleküle und somit auch die Richtung der Polarisation umgekehrt. Beide Schaltzustände unterscheiden sich optisch und sind stabil. Ein reflektives FLCD besteht prinzipiell aus einem Polarisator, der flüssigkristallinen Phase und einem hinterlegten Spiegel. Je nach Kipprichtung der smektischen Phase relativ zum Polarisator werden Hell- und Dunkelzustände erzeugt.

Eine weitere Technologie stellen die Electrically Adressable Smectic Liquid Displays (EASL) dar. Dabei handelt es sich um ein Flüssigkristall-Display, welches auf elekrooptischen Effekten smektischer Flüssigkristalle beruht. Die nicht gekippten smektischen Schichten sind parallel zur Displayzelle ausgerichtet und in diesem Zustand unterliegt einfallendes Licht keiner Doppelbrechung. Das Display erscheint transparent oder bei Hinterlegung mit einer gefärbten Reflexionsschicht in der entsprechenden Farbe. Der zweite Zustand zeichnet sich durch zufällig angeordnete fokal-konische Domänen aus, an denen Streulicht erzeugt wird. Durch die dann vorliegende Doppelbrechung erscheint dieses Streulicht weiß und bei Zusatz von dichroitischen Farbstoffen in der entsprechenden Farbe. Beide Zustände können durch Anlegen einer elektrischen Spannung ineinander überführt werden.

Zenithal Bistable Devices (ZBD) sind Displays auf Basis nematischer Flüssigkristalle. Bei diesem besonderen Typ eines nematischen Displays werden auf einem Substrat durch eine Grabenstruktur im Mikrometerbereich Störungen der nematischen Ordnung derart induziert, dass je nach Einfluss eines elektrischen Gleichfeldes entweder eine planare oder eine homöotrope Orientierung eingestellt werden kann.

Die BiNem-Technologie beruht auf der Bistabilität zweier nematischer Zustände. Der Flüssigkristall liegt in planarer Orientierung vor und erfährt auf dem einen Substrat eine starke Randanbindung, während es auf dem anderen Substrat eine schwache Randanbindung erfährt. Mit dezidierten Stromimpulsen kann zwischen einer nicht verdrillten Bulk-Struktur und einer um 180° verdrillten Bulk-Struktur geschaltet werden. Wird eine mit parallel angeordneten Polarisatoren ausgestattete Flüssigkristallzelle mit einer Absorptionsfolie hinterlegt, erscheint der nicht verdrillte Zustand weiß, während der verdrillte Zustand schwarz erscheint.

Die Technologie der Cholesteric Liquid Crystal Displays (CHLCD) beruht auf verdrillt nematischen flüssigkristallinen Phasen. Chiral nematische Phasen oder mit chiralen Dotierstoffen versehene nematische Phasen bilden helikale Strukturen auf molekularer Ebene aus. Ist die Länge der Helix gleich der Wellenlänge sichtbaren Lichts wird dieses selektiv reflektiert (Helix senkrecht zur Displayfläche) oder transmittiert (zufällige Anordnung der Helices). Beide Zustände sind langzeitstabil und können durch Anlegen einer Spannung ineinander überführt werden.

Bei den Anzeigen kann es sich ferner um ein Polymer-Display wie eine OLED (Organic Light Emitting Diode) handeln. Derartige Displays bestehen aus einem Mehrschichtensystem, bei dem ein sehr dünnes Polymer zwischen zwei Elektroden angeordnet ist. Dadurch lässt sich eine dünne Anzeige realisieren, welche als Papierersatz zur Kennzeichnung von Gegenständen verwendet werden kann. Dabei genügt es, schwarz-weiße Anzeigen einzusetzen, es können jedoch auch aufwändigere Anzeigen mit mehreren Farben verwendet werden. Derartige OLED-Anzeigen weisen den Vorteil auf, dass sie weniger Energie als LED-Anzeigen benötigen, so dass die Lebensdauer einer Batterie einer Behälterkennzeichnung erhöht werden kann.

In einer besonders bevorzugten Ausführungsform der Erfindung werden die Displays durch elektronische Tinte gebildet. Dabei handelt es sich chemisch um Mikrokapseln, die zwei verschiedene Farbkomponenten unterschiedlicher Ladung enthalten, welche sich im elektrischen Feld ausrichten. Aufgrund der Partikelgrößen und der Viskosität des Systems erfolgt nach dem Abschalten des elektrischen Feldes keine sofortige Rückrelaxion in einen ungeordneten Ausgangszustand. Es erfolgt somit kein Verlust der eingeschriebenen Informationen, sondern es tritt gegebenenfalls lediglich eine Abnahme des Konstrastes ein.

Als Beispiele für elektronische Tinte sind die Produkte SmartPaper^{™} des Unternehmens Gyricon und elektrophoretische Displays des Unternehmens E-Ink zu nennen. Dabei handelt es sich bei den elektrophoretischen Displays um Mikrokapseln, die geladene Farbstoffpartikel enthalten. Die Einzelpartikel sind jedoch farblos und kleiner als bei anderen elektronischen Tinten. Eine Mikrokapsel enthält eine größere Anzahl von Partikeln zweier Farben, die in eine Trägerflüssigkeit eingebettet und von einer harten Schale umschlossen sind. Die einzelnen Farbpartikel sind unterschiedlich geladen und bewegen sich beim Anlegen eines elektrischen Feldes ihrer Polarität entsprechend zu einer der Elektroden.

Elektrophoretische Anzeigen weisen günstige Eigenschaften insbesondere bezüglich der mechanischen Anforderungen an Flexibilität, Stoßempfindlichkeit und Druckstabilität auf. Ferner bieten sie ein ausreichend bistabiles Verhalten und arbeiten innerhalb eines Temperaturbereiches, der den typischen Witterungsbedingungen für ein Transportbehältersystem entspricht. Ferner ist durch die vergleichsweise niedrige Ansteuerungsspannung der schaltungstechnische Aufwand für die Energieversorgung begrenzt.

In einem Ausführungsbeispiel der Erfindung umfasst ein elektronische Label wenigstens eine drahtlose Schnittstelle für die vorzugsweise bidirektionale Übertragung von Daten und ein Display zur Visualisierung von optisch erfassbaren Informationen. Bei der Schnittstelle handelt es sich vorzugsweise um ein RFID-Bauteil wie einen Chip. Darüber hinaus ist eine logische Schaltung für das Datenmanagement integriert, welche den Transfer von Daten von der drahtlosen Schnittstelle zum Display durchführt. Ferner umfasst ein Label zweckmäßigerweise ein Schaltungsteil für die Bereitstellung der von den einzelnen Systemkomponenten benötigten Energie.

Es hat sich als zweckmäßig erwiesen, die für den Betrieb des elektronischen Labels erforderliche Energie über die drahtlose Schnittstelle zu übertragen. Die Übertragung von über die drahtlose Schnittstelle empfangenen Daten an die Anzeige wird beispielsweise von einem Mikrocontroller in Verbindung mit einem geeigneten Displaytreiber übernommen. Je nach Art der Verknüpfung und der zusätzlichen Beschaltung dieser Grundelemente lassen sich verschiedene Konzeptvarianten des Gesamtsystems realisieren.

Kommen aktive (monostabile) LCDs zur Anwendung, ist eine permanente Energieversorgung des Displays erforderlich, was die Intergration eines Energiespeichers wie einer Batterie, eines Akkus oder eines Kondensators mit ausreichender Kapazität erfordert. Die zu übertragenden Daten werden über eine RF-Schnittstelle entgegengenommen und dort direkt gespeichert. Für die Anzeige relevante Daten werden an einen Mikrocontroller mit Displaytreiber übergeben, der die Ansteuerung des Displays übernimmt. Während der Datenübertragung wird aus dem RF-Signal durch einen separaten Schaltungsteil Energie gewonnen, die zum Auffüllen eines Energiespeichers dient, durch den die Versorgung von Controller und Display sichergestellt wird.

Die für das RF-Bauteil benötigte Energie wird von diesem direkt aus dem RF-Signal entnommen. Alle hierfür benötigten Komponenten sind vorzugsweise bereits in dem RFID-Chip enthalten. Der nötige Aufwand für die Schaltung zur zusätzlichen Energiegewinnung ist hingegen stark von der Versorgungsspannung der weiteren angeschlossenen Komponenten abhängig.

Beim Einsatz von passiven (bistabilen) Displays kann eine vereinfachte Variante des zuvor aufgeführten Konzepts zur Anwendung kommen. Dabei bleiben die Grundelemente des RF-Bauteils und des Mikrocontrollers mit Displayansteuerung erhalten. Durch den Einsatz eines passiven Displays kann jedoch auf den Energiespeicher verzichtet werden. Da bistabile Displays üblicherweise mit einer höheren Betriebsspannung als herkömmliche LCDs arbeiten, ändert sich die Ansteuerung des Displays. Zur Gewinnung der Ansteuerspannung können zusätzliche (passive) Komponenten eingesetzt werden, was jedoch die Anzahl der Bauteile erhöht.

Für passive (bistabile) Displays können beispielsweise zwei separate RF-Bauteile zum Einsatz kommen. Bei einem Bauteil kann es sich um ein RFID-IC-Bauteil handeln, welches die zur Energiegewinnung aus dem RF-Signal notwendige Beschaltung enthält. Der Teil der Schaltung, welcher für die Ansteuerung des Displays vorgesehen ist, ist vorzugsweise entkoppelt von dem RFID-IC-Bauteil aufgebaut. Dies vereinfacht die Anpassung des zweiten RF-Bauteils sowie zusätzlich benötigter Komponenten an die höhere Versorgungsspannung des passiven Displays. Die an das Display zu übertragenden Daten werden vom zweiten RF-Bauteil somit nur durchgeleitet und über den nachfolgenden Mikrocontroller mit Displayansteuerung zur Anzeige gebracht.

In einer weiteren Ausführungsform des elektronischen Labels wird die Anzahl der Systemkomponenten möglichst gering gehalten, indem alle Komponenten mit Ausnahme des Displays innerhalb eines anwendungsspezifischen ICs integriert werden. Das Ziel einer derartigen ASIC (Application Specific IC) beziehungsweise CSIC (Customer Specific IC) ist es es, möglichst alle benötigten Funktionalitäten für ein elektronisches Endprodukt in einen einzigen Halbleiter zu integrieren.

Um ein möglichst dünnes elektronisches Etikett zu erhalten, welches sich für den Einsatz als Kennzeichnung von Behältern eignet, müssen alle Komponenten auf einen Träger aufgebracht werden. Dieser Träger kann beispielsweise aus flexiblem Material wie PET oder PEN bestehen. Dabei hat es sich als vorteilhaft erwiesen, dass die Substrate eine Cu/Ni/Au oder Cu/Ag-Metallisierung aufweisen. Auf diese Träger können die einzelnen Komponenten beispielsweise durch Klebetechnologien aufgebracht werden.

Die Übertragung von Informationen auf eine Behälterkennzeichnung kann auf verschiedene Arten erfolgen, wobei es sich prinzipiell um manuelle oder automatische Vorgänge handelt. In einem besonders bevorzugten Ausführungsbeispiel der Erfindung erfolgt die Übertragung berührungslos. Die Informationen können beispielsweise über ein Handheld übertragen werden, welches von Personalkräften manuell in den Empfangsbereich der Anzeige gebracht wird und welches dem Behälter zugeordnete Informationen auf die Kennzeichnung überträgt. In einem weiteren bevorzugten Ausführungsbeispiel erfolgt die Übertragung mittels ein oder mehrerer Gates, durch deren Wirkungsbereich der jeweilige Behälter bewegt wird. Bei Bewegung durch das Gate wird automatisch eine vorprogrammierte Information auf den Behälter übertragen.

Die Übertragung von Daten kann auch mittels eines Kontakts mit der Anzeige realisiert werden. Beispielsweise kann der Behälter so in einer Vorrichtung platziert und ausgerichtet werden, dass ein Übertragungsmittel in die elektronische Anzeige eingreift und einen Kontakt herstellt, über welchen Daten übertragen werden können.

Wird der Behälter in einem postalischen Sortier- und Transportsystem eingesetzt, hat es sich als vorteilhaft erwiesen, die Übertragung von Informationen wenigstens teilweise an festen Positionen vorzunehmen, an denen ein Behälter für einen bestimmten Zeitraum platziert wird. Beispielsweise werden Behälter herkömmlicherweise in Postfilialen mit Infoträgern versehen, welche die von einem Bearbeiter in diesem Behälter zu sammelnde Briefart und/oder das Transportziel des Behälters beinhalten können. Diese weitestgehend gleich bleibende Information kann fest in einer Vorrichtung gespeichert werden, in der oder in deren Nähe der Behälter positioniert wird, so dass die Vorrichtung die Information auf die elektronische Anzeige übertragen kann. In einer weiteren Ausführungsform der Erfindung kann ein Bearbeiter die zu übertragenden Informationen frei in die Vorrichtung programmieren oder beispielsweise durch weitere Angaben ergänzen.

Der erfindungsgemäße Behälter kann vorteilhaft in postalischen Sortiersystemen eingesetzt werden, in denen Behälter mit Sendungen an verschiedenen Umschlag- und Sortierstationen mit neuen Infoträgern versehen werden müssen. In einem derartigen System sind die auf einen Behälter zu übertragenden Informationen beispielsweise abhängig von den Ausgangszielen einer Sortieranlage. Herkömmlicherweise sortiert eine Sortieranlage eingebrachte Sendungen nach einem bestimmten Sortierplan und erzeugt an mehreren Ausgängen der Vorrichtung Ansammlungen von Sendungen mit dem gleichen Ziel. Bei diesem Ziel kann es sich bereits um eine Zustellregion oder den Eingang einer weiteren Sortieranlage handeln.

Bei bekannten Sortieranlagen versieht ein Bearbeiter einen Behälter mit einem Papierlabel, auf welche durch eine Steurung der Sortieranlage automatisch die entsprechende Zielinformation gedruckt wird, und der Bearbeiter positioniert den gekennzeichneten Behälter an dem zugeordneten Ausgangspunkt der Anlage. Bei der Verwendung eines erfindungsgemäßen Behälters könnte diese Zielinformation direkt zu dem betreffenden Ausgangspunkt der Anlage übermittelt werden. Der Bearbeiter muss somit nur noch einen Behälter platzieren, und die Zielinformationen würden automatisch auf das daran befindliche elektronische Display überspielt. Dadurch können Verwechslungen und fehlerhafte Kennzeichnungen von Behältern verhindert werden.

In einem weiteren besonders bevorzugten Ausführungsbeispiel der Erfindung wird die optisch erfassbare elektronische Anzeige eines Etiketts durch einen RFID-Transponder ergänzt, welcher ebenfalls in das Etikett integriert ist. Dadurch lassen sich die gleichen oder unterschiedliche Informationen in dem RFID-Transponder speichern, wie.sie auf der elektronischen Anzeige angezeigt werden. Typischerweise werden RFID-Transponder für die Nachverfolgung von Behältern und zur Erzeugung von Transportstatistiken verwendet, so dass dafür erforderliche Informationen gespeichert werden.

Das Ein- und Auslesen von Daten über den Transponder kann ebenfalls über Handhelds, Gates oder an festen Übertragungsvorrichtungen erfolgen, die an einzelnen Positionen eines Versandsystems installiert sind.

## Patentansprüche

1. Behälter zur Aufnahme und/oder zum Transport von Gegenständen in einem postalischen Sortier- und Transportsystem, mit einem mehrfach beschreibbaren elektronischen Etikett, wobei das Etikett wenigstens eine optisch erfassbare elektronische Anzeige aufweist, welche Informationen über den Inhalt und/oder das Transportziel des Behälters anzeigt, wobei es sich bei der optisch erfassbaren Anzeige um ein elektrophoretisches Bauteil auf der Basis von elektronischer Tinte mit bistabilen Elementen handelt, und die elektronische Anzeige über eine drahtlose Schnittstelle ansteuerbar ist, **dadurch gekennzeichnet, dass** das elektronische Etikett ein erstes RFID-IC-Bauteil mit einer Beschaltung zur Energiegewinnung aus einem RF-Signal und ein zweites RF-Bauteil mit einer Beschaltung zum Empfang von Informationen aus einem RF-Signal umfasst, wobei das zweite RF-Bauteil in Verbindung mit einem Mikrocontroller und einer Displayansteuerung steht, wobei das elektronische Etikett des Behälters zusätzlich zu einer optisch erfassbaren elektronischen Anzeige einen beschreibbaren und auslesbaren RFID-Transponder aufweist, und in der Anzeige und in dem RFID-Transponder die gleichen Informationen angezeigt werden, beziehungsweise aus diesem auslesbar sind.

2. Behältern nach Anspruch 1,
**dadurch gekennzeichnet,**
**dass** es sich um einen postalischen Behälter zur Aufnahme und/oder zum Transport von Postsendungen handelt.

3. Behälter nach einem oder beiden der Ansprüche 1 und 2,
**dadurch gekennzeichnet,**
**dass** es sich bei den angezeigten Informationen um Text und/oder um graphische Informationen handelt.

4. Behälter nach einem oder mehreren der Ansprüche 1 bis 3,
**dadurch gekennzeichnet,**
**dass** es sich bei den angezeigten Informationen um verschlüsselte Informationen handelt, welche durch eine optische Vorrichtung erfassbar sind.

5. Behälter nach Anspruch 4,
**dadurch gekennzeichnet,**
**dass** es sich bei den angezeigten Informationen um einen Barcode handelt.

6. Behälter nach einem oder mehreren der Ansprüche 1 bis 5,
**dadurch gekennzeichnet,**
**dass** der Behälter in einem postalischen Sortier- und Transportsystem verwendet wird und die optisch erfassbare elektronische Anzeige Sortier- und Umschlagstationen des Behälters anzeigt.

## Claims

1. Container for holding and/or transporting mailpieces within a postal sorting and transporting system, with a label that can be written multiple times, whereby the label comprises at least one optically detectable electronic display that shows information about the content and/or the transport destination of the container, whereby the optically detectable display is an electrophoretic component on the basis of electronic ink with bistable elements, and the electronic display can be actuated via a wireless interface, **characterized in that** the electronic label comprises a first RFID-IC-component with a wiring for generating energy from a RF-signal and a second RF-component with a wiring for receiving information from the RF-signal, whereby the second RF-component is connected to a microcontroller and a display actuating means, whereby in addition to an optically detectable electronic display, the electronic label has an RFID transponder that can be written and read out and the same information can be displayed in or else read out from the electronic display and the RFID transponder.

2. Container according to Claim 1, **characterized in that** the container is a postal container for holding and/or transporting mailpieces.

3. Container according to one or both of Claims 1 and 2, **characterized in that** the displayed information is text and/or graphic information.

4. Container according to one or more of Claims 1 to 3, **characterized in that** the displayed information is encrypted information that can be detected by means of an optical device.

5. Container according to Claim 4, **characterized in that** the displayed information is a barcode.

6. Container according to one or more of Claims 1 to 5, **characterized in that** the container is used in a postal sorting and transporting system and the optically detectable electronic display shows the sorting and transfer stations for the container.

## Revendications

1. Récipient destiné à recevoir et/ou à transporter des objets dans un système de tri et de transport postal, présentant une étiquette électronique réinscriptible plusieurs fois, l'étiquette comportant au moins un affichage électronique détectable optiquement qui affiche des informations relatives au contenu et/ou à la destination du transport du récipient, l'affichage détectable optiquement étant un composant électrophorétique à base d'encre électronique avec des éléments bistables et l'affichage électronique étant commandable par l'intermédiaire d'une interface sans fil, **caractérisé en ce que** l'étiquette électronique comprend un premier composant IC RFID avec un câblage pour obtenir de l'énergie à partir d'un signal RF et un deuxième composant RF avec un câblage pour recevoir des informations à partir d'un signal RF, le deuxième composant RF étant relié à un microcontrôleur et à une commande d'affichage, l'étiquette électronique du récipient comportant, en plus d'un affichage électronique détectable optiquement, un transpondeur RFID inscriptible et extractible, et les mêmes informations étant affichées dans l'affichage et dans le transpondeur RFID respectivement pouvant en être extraites.

2. Récipient selon la revendication 1, **caractérisé en ce qu'**il s'agit d'un récipient postal destiné à recevoir et/ou à transporter des envois postaux.

3. Récipient selon l'une des ou les deux revendications 1 et 2, **caractérisé en ce que** les informations affichées sont du texte et/ou des informations graphiques.

4. Récipient selon l'une ou plusieurs des revendications 1 à 3, **caractérisé en ce que** les informations affichées sont des informations cryptées qui peuvent être détectées par un dispositif optique.

5. Récipient selon la revendication 4, **caractérisé en ce que** les informations affichées sont un code-barres.

6. Récipient selon l'une ou plusieurs des revendications 1 à 5, **caractérisé en ce que** le récipient est utilisé dans un système de tri et de transport postal et l'affichage électronique détectable optiquement affiche des stations de tri et de transbordement du récipient.
